# EUROPEAN PATENT SPECIFICATION

(11) **EP 3 492 203 B1**
(45) Date of publication and mention of the grant of the patent: **26.08.2020**
(21) Application number: 18206069.9
(22) Date of filing: 13.11.2018
(51) Int. Cl.: B23B 31/175, B23Q 3/06, B23B 31/19, B23B 31/16

(54) **LATHE FIXTURE FOR CLAMPING AUTOMOBILE HUB**
DREHVORRICHTUNG ZUM EINSPANNEN EINER KRAFTFAHRZEUGNABE
FERRURE DE SERRAGE POUR SERRAGE DE MOYEU D'AUTOMOBILE

(30) Priority: 30.11.2017 CN 201711235363
(43) Date of publication of application: 05.06.2019
(73) Proprietor: Citic Dicastal Co., Ltd., 066011 Quinhuangdao, Heibei (CN)
(72) Inventor: LIU, Xiao, Qinhuangdao, Heibei 066011 (CN); Guo, Jiandong, Qinhuangdao, Heibei 066011 (CN)
(74) Representative: Gong, Jinping

(56) References cited:
- CN-U- 204 603 903
- CN-U- 204 603 904
- US-A1- 2017 312 833
- US-A1- 2017 312 834

## Description

### Field of the Invention

The present invention relates to the field of automobile engineering, specifically to an automobile hub lathe fixture.

### Background of the Invention

A plurality of processes including machining, airtightness detection, spraying and the like are needed from a wheel blank to an available finished product. In the machining process, the wheel blank is usually machined in three steps. The existing first-step fixture, second-step fixture and three-step fixture are not the same in structure, but they have a common feature that the fixtures can only be applied to wheels of a fixed size compatible with their sizes. If wheels of another size are to be machined, a few groups of positioning and clamping mechanisms need to be replaced, which increases the production assistance time of the workshop, reduces the production efficiency and increases the labor intensity of workers. In addition, the existing first-step fixture and second-step fixture adopt too heavy balance blocks for balancing the centrifugal force of fixture rotating bodies. If the rotating speed of a machine tool spindle is to be improved to increase the production efficiency, the upper structure of the fixture will bear a large centrifugal force, which is even beyond the safe use condition of the fixture.

Document CN 204 603 903 U shows a lathe fixture for clamping an automobile hub according to the preamble of claim 1.

### Summary of the Invention

The object of the present invention is to provide an automobile hub lathe fixture, thereby achieving safe and effective clamping of an automobile hub.

A lathe fixture for clamping an automobile has the features of claim 1, comprising a base I, a deflection block support block, a deflection block, a deflection block guide shaft, a circular plate, a positioning pull rod, a clamping jaw, screws I, pins I, screws II, a power chuck, screws III, a dust cover, screws IV, a support shaft, a screw V, screws VI, a spindle body, screws VII, a rivet, an O-shaped rubber ring, a base II, screws VIII, a balance block guide rail, a balance block, a balance block guide shaft, a positioning pull rod pressure plate, an airtight base, an airtight lifting plate and a pin II, characterized in that the base II is connected with the base I via a group of screws VIII and the pin II, the circular plate is connected with the base I via a group of screws VI, the power chuck is connected to the base II via a group of screws III, the O-shaped rubber ring is placed between the power chuck and a groove of the base II, the rivet 20 penetrates through the power chuck and is in threaded connection with the interior of the spindle body, the balance block guide rail is fixedly connected to the base I via a group of screws VIII, the deflection block support block is connected to the base I, the deflection block guide shaft penetrates through a through hole on the deflection block and is immobilized, the balance block guide shaft penetrates through the deflection block and the balance block, the deflection block rotates around the deflection block guide shaft, the balance block is driven by the balance block guide shaft to move linearly along the balance block guide rail in the radial direction of the fixture, the positioning pull rod is connected and fixed to the power chuck through a group of screws II, the clamping jaw is connected and fixed to the positioning pull rod via a group of screws I and a group of pins I, the dust cover is connected and fixed to the circular plate via a group of screws, the support shaft penetrates through the base I and is connected and fixed to the base II by threaded connection, the upper end of the support shaft is connected and fixed with the circular plate via the screw V, the positioning pull rod pressure plate is fixed on the circular plate by threaded connection, the positioning pull rod moves linearly in the radial direction in a guide groove between the circular plate and the positioning pull rod pressure plate, the airtight base is fixed on the circular plate, the airtight lifting plate limits the travel range in the vertical direction, and the fixture is fixedly connected to the spindle body via a group of screws VII.

In a preferred aspect of the present invention, the base I is made of forged aluminum alloy.

In a preferred aspect of the present invention, the angle of the clamping jaw is 75°, 45° or 60°.

In a preferred aspect of the present invention, the clamping jaw is made of aluminum alloy.

In a preferred aspect of the present invention, the outer surface of the deflection block is machined by low speed wire cutting.

In a preferred aspect of the present invention, the length of the force arm formed by the force application point of the balance block guide shaft and the deflection block and the rotation center of the deflection block guide shaft is 1-5 times the length of the force arm formed by the force application point of the deflection block and the positioning pull rod and the rotation center of the deflection block guide shaft.

In a preferred aspect of the present invention, the length of the force arm formed by the force application point of the balance block guide shaft and the deflection block and the rotation center of the deflection block guide shaft is 2 times the length of the force arm formed by the force application point of the deflection block and the positioning pull rod and the rotation center of the deflection block guide shaft 4.

In a preferred aspect of the present invention, 2, 3, 4, 5, 6, 7, 8, 9 or 10 drainage holes are uniformly distributed in the circumferential direction of the base II.

In a preferred aspect of the present invention, a weight reduction pit is disposed inside the circular plate.

Compared with the conventional automobile hub lathe fixture, the present invention has a large relaxing/clamping travel and can adapt to the machining of hubs of multiple sizes. The deflection block is adopted in the present invention to counteract a part of centrifugal force of the clamping jaw, the positioning rod and other parts. The proportional range of the force arm of the deflection block of the present invention is 1 to 5, which is greater than the proportion of the force arm of the conventional fixture. For generating the same centrifugal force resistance, the mass of the balance block used in the present invention is much lower than that of the balance block adopted in the conventional fixture, which is advantageous for reducing the overall weight of the fixture, so that the fixture can work at a higher rotation speed and the work efficiency is improved. The positioning pull rod of the present invention has an integral structure and is directly connected and fixed to the power chuck by screws, which reduces the intermediate transmission link of the conventional fixture and enhances the service reliability of the fixture; the height of the positioning surface of the clamping jaw mounted on the positioning pull rod of the present invention relative to the power chuck is greatly reduced over the conventional fixture, thereby reducing the influence of the bending moment on the positioning pull rod and prolonging the service life of the positioning pull rod. The support shaft of the present invention is connected and fixed between the circular plate and the base II, and shares the bearing weight of the base I of the forged aluminum alloy to the overall fixture, thereby enhancing the overall rigidity of the fixture.

### Brief Description of the Drawings

The embodiments of the present invention will be described in detail below in combination with the accompanying drawings.

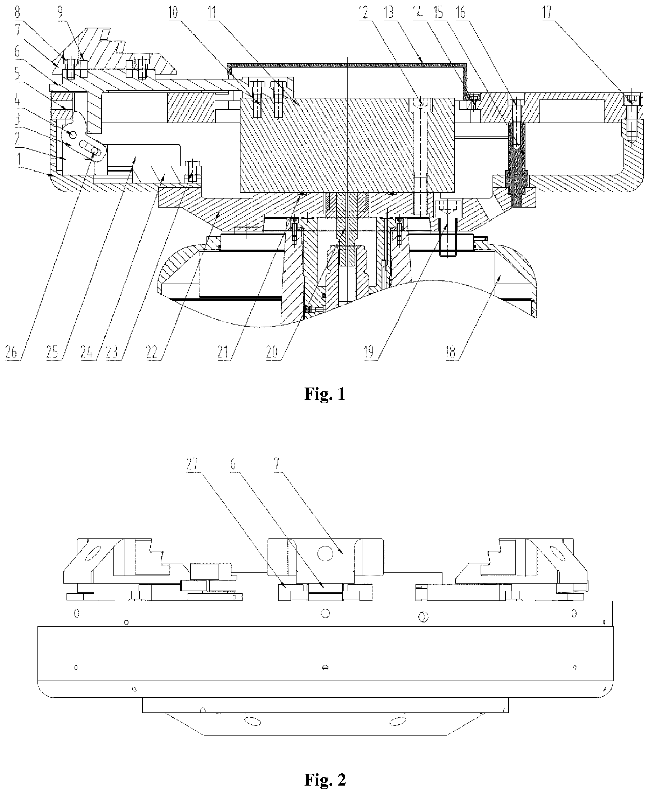

Fig. 1 is an A-A view of an automobile hub lathe fixture.
Fig. 2 is a front view of the automobile hub lathe fixture.

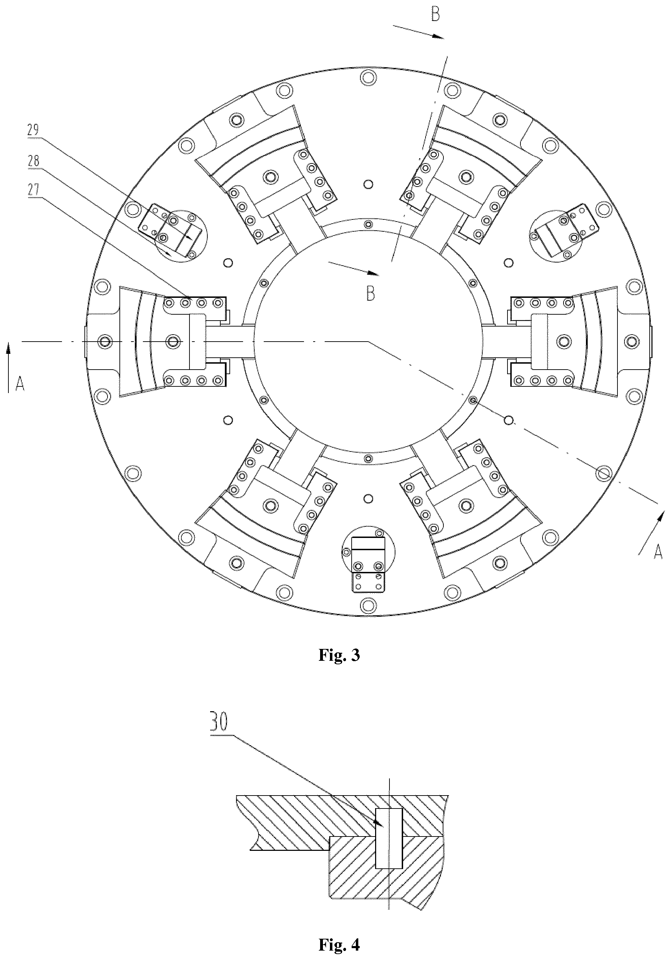

Fig. 3 is a top view of the automobile hub lathe fixture.
Fig. 4 is a partial cross-sectional view B-B of the automobile hub lathe fixture.

In which: 1-base I, 2-deflection block support block, 3-deflection block, 4-deflection block guide shaft, 5-circular plate, 6-positioning pull rod, 7-clamping jaw, 8-screw I, 9-pin I 10-screw II, 11-power chuck, 12-screw III, 13-dust cover, 14-screw IV, 15-support shaft, 16-screw V, 17-screw VI, 18-spindle body, 19-screw VII, 20-rivet, 21-O-shaped rubber ring, 22-base II, 23-screw VIII, 24-balance block guide rail, 25-balance block, 26-balance block guide shaft, 27-positioning pull rod pressure plate, 28-airtight base, 29-airtight lifting plate, 30-pin II.

### Detailed Description of the Embodiments

The specific embodiments of the present invention will be further described in detail below in combination with the accompanying drawings.

A lathe fixture for clamping an automobile hub, comprising a base I 1, a deflection block support block 2, a deflection block 3, a deflection block guide shaft 4, a circular plate 5, a positioning pull rod 6, a clamping jaw 7, screws I 8, pins I 9, screws II 10, a power chuck 11, screws III 12, a dust cover 13, screws IV 14, a support shaft 15, a screw V 16, screws VI 17, a spindle body 18, screws VII 19, a rivet 20, an O-shaped rubber ring 21, a base II 22, screws VIII 23, a balance block guide rail 24, a balance block 25, a balance block guide shaft 26, a positioning pull rod pressure plate 27, an airtight base 28, an airtight lifting plate 29 and a pin II 30, characterized in that the base II 22 is connected with the base I 1 via a group of screws VIII 23 and the pin II 30, the circular plate 5 is connected with the base I 1 via a group of screws VI 17, the power chuck 11 is connected to the base II 22 via a group of screws III 12, the O-shaped rubber ring 21 is placed between the power chuck 11 and a groove of the base II 22, the rivet 20 penetrates through the power chuck 11 and is in threaded connection with the interior of the spindle body 18, the balance block guide rail 24 is fixedly connected to the base I 1 via a group of screws VIII 23, the deflection block support block 2 is connected to the base I 1, the deflection block guide shaft 4 penetrates through a through hole on the deflection block 3 and is immobilized, the balance block guide shaft 26 penetrates through the deflection block 3 and the balance block 25, the deflection block 3 rotates around the deflection block guide shaft 4, the balance block 25 is driven by the balance block guide shaft 26 to move linearly along the balance block guide rail 24 in the radial direction of the fixture, the positioning pull rod 6 is connected and fixed to the power chuck 11 through a group of screws II 10, the clamping jaw 7 is connected and fixed to the positioning pull rod 6 via a group of screws I 8 and a group of pins I 9, the dust cover 13 is connected and fixed to the circular plate 5 via a group of screws 14, the support shaft 15 penetrates through the base I 1 and is connected and fixed to the base II 22 by threaded connection, the upper end of the support shaft 15 is connected and fixed with the circular plate 5 via the screw V 16, the positioning pull rod pressure plate 27 is fixed on the circular plate 5 by threaded connection, the positioning pull rod 6 moves linearly in the radial direction in a guide groove between the circular plate 5 and the positioning pull rod pressure plate 27, the airtight base 28 is fixed on the circular plate 5, the airtight lifting plate 29 limits the travel range in the vertical direction, and the fixture is fixedly connected to the spindle body 18 via a group of screws VII 19.

In actual use, the reciprocating motion of a lathe spindle through the rivet 20 is converted into the reciprocating motion of the clamping jaw 7 in the radial direction of the fixture by the positioning pull rod 6. When the spindle is at the bottom dead center within its travel range, the clamping jaw 7 is closest to the center of the fixture within its travel range; and when the spindle is at the top dead center within its travel range, the clamping jaw 7 is farthest from the center of the fixture within its travel range. The outer diameter of the wheel is within the travel range of the clamping jaw 7.

The present invention has a large relaxing/clamping travel and can adapt to the machining of hubs of multiple sizes; the overall weight of the fixture is lighter than that of the conventional common fixture, and the fixture can work at a higher rotation speed and has high work efficiency.

## Claims

1. A lathe fixture for clamping an automobile hub, comprising a base I (1), a deflection block support block (2), a deflection block (3), a deflection block guide shaft (4), a circular plate (5), a positioning pull rod (6), a clamping jaw (7), screws I (8), pins I (9), screws II (10), a power chuck (11), screws III (12), a dust cover (13), screws IV (14), a support shaft (15), a screw V (16), screws VI (17), a spindle body (18), screws VII (19), a rivet (20), a base II (22), screws VIII (23), a balance block (25), a balance block guide shaft (26), a positioning pull rod pressure plate (27), an airtight base (28), and an airtight lifting plate (29), **characterized in that** the lathe fixture further comprises an O-shaped rubber ring (21), a balance block guide rail (24) and a pin II (30), wherein the base II (22) is connected with the base I (1) via a group of screws VIII (23) and the pin II (30), the circular plate (5) is connected with the base I (1) via a group of screws VI (17), the power chuck (11) is connected to the base II (22) via a group of screws III (12), the O-shaped rubber ring (21) is placed between the power chuck (11) and a groove of the base II (22), the rivet (20) penetrates through the power chuck (11) and is in threaded connection with the interior of the spindle body (18), the balance block guide rail (24) is fixedly connected to the base I (1) via a group of screws VIII (23), the deflection block support block (2) is connected to the base I (1), the deflection block guide shaft (4) penetrates through a through hole on the deflection block (3) and is immobilized, the balance block guide shaft (26) penetrates through the deflection block (3) and the balance block (25), the deflection block (3) rotates around the deflection block guide shaft (4), the balance block (25) is driven by the balance block guide shaft (26) to move linearly along the balance block guide rail (24) in the radial direction of the fixture, the positioning pull rod (6) is connected and fixed to the power chuck (11) through a group of screws II (10), the clamping jaw (7) is connected and fixed to the positioning pull rod (6) via a group of screws I (8) and a group of pins I (9), the dust cover (13) is connected and fixed to the circular plate (5) via a group of screws (14), the support shaft (15) penetrates through the base I (1) and is connected and fixed to the base II (22) by threaded connection, the upper end of the support shaft (15) is connected and fixed with the circular plate (5) via the screw V (16), the positioning pull rod pressure plate (27) is fixed on the circular plate (5) by threaded connection, the positioning pull rod (6) moves linearly in the radial direction in a guide groove between the circular plate (5) and the positioning pull rod pressure plate (27), the airtight base (28) is fixed on the circular plate (5), the airtight lifting plate (29) limits the travel range in the vertical direction, and the fixture is fixedly connected to the spindle body (18) via a group of screws VII (19).

2. The lathe fixture for clamping an automobile hub according to claim 1, wherein the base I(1) is made of forged aluminum alloy.

3. The lathe fixture for clamping an automobile hub according to claim 1, wherein the angle of the clamping jaw (7) is 75°, 45° or 60°.

4. The lathe fixture for clamping an automobile hub according to claim 1, wherein the clamping jaw (7) is made of aluminum alloy.

5. The lathe fixture for clamping an automobile hub according to claim 1, wherein the outer surface of the deflection block (3) is machined by low speed wire cutting.

6. The lathe fixture for clamping an automobile hub according to claim 1, wherein the length of the force arm formed by the force application point of the balance block guide shaft (26) and the deflection block (3) and the rotation center of the deflection block guide shaft (4) is 1-5 times the length of the force arm formed by the force application point of the deflection block (3) and the positioning pull rod (6) and the rotation center of the deflection block guide shaft (4).

7. The lathe fixture for clamping an automobile hub according to claim 6, wherein the length of the force arm formed by the force application point of the balance block guide shaft (26) and the deflection block (3) and the rotation center of the deflection block guide shaft (4) is two times the length of the force arm formed by the force application point of the deflection block (3) and the positioning pull rod (6) and the rotation center of the deflection block guide shaft (4).

8. The lathe fixture for clamping an automobile hub according to claim 1, wherein 2, 3, 4, 5, 6, 7, 8, 9 or 10 drainage holes are uniformly distributed in the circumferential direction of the base II (22).

9. The lathe fixture for clamping an automobile hub according to claim 1, wherein a weight reduction pit is disposed inside the circular plate (5).

## Patentansprüche

1. Spannwerkzeug für Drehmaschine zum Spannen einer Automobilnabe, umfassend eine Basis I (1), einen Ablenkblock-Stützblock (2), einen Ablenkblock (3), eine Ablenkblockführungswelle (4), eine kreisförmige Platte (5), eine Positionierzugstange (6), eine Klemmbacke (7), Schrauben I (8), Stifte I (9), Schrauben II (10), ein Spannfutter (11), Schrauben III (12), eine Staubabdeckung (13), Schrauben IV (14), eine Stützwelle (15), Schrauben V (16), Schrauben VI (17), einen Spindelkörper (18), Schrauben VII (19), einen Niet (20), eine Basis II (22), Schrauben VIII (23), einen Ausgleichsblock (25), eine Ausgleichsblockführungswelle (26), eine Positionierzugstangen-Druckplatte (27), eine luftdichte Basis (28) und eine luftdichte Hebeplatte (29), **dadurch gekennzeichnet, dass** das Spannwerkzeug für die Drehmaschine ferner einen O-förmigen Gummiring (21), eine Ausgleichsblockführungsschiene (24) und einen Stift II (30) umfasst, wobei die Basis II (22) über eine Gruppe von Schrauben VIII (23) und den Stift II (30) mit der Basis I (1) verbunden ist, wobei die kreisförmige Platte (5) über eine Gruppe von Schrauben VI (17) mit der Basis I(1) verbunden ist und das Kraftfutter (11) über eine Gruppe von Schrauben III (12) mit der Basis II (22) verbunden ist, wobei der O-förmige Gummiring (21) zwischen dem Kraftfutter (11) und einer Nut der Basis II (22) angeordnet ist, wobei der Niet (20) das Kraftfutter (11) durchdringt und in Gewindeverbindung mit dem Inneren des Spindelkörpers (18) steht; wobei die Ablenkblockführungswelle (24) über eine Gruppe von Schrauben VIII (23) fest mit der Basis I (1) verbunden ist, wobei der Stützblock (2) des Ablenkblocks mit der Basis I (1) verbunden ist; wobei die Ablenkblockführungswelle (4) durch ein Durchgangsloch am Ablenkblock (3) eindringt und immobilisiert ist, wobei die Ausgleichsblockführungswelle (26) durch den Ablenkblock (3) und den Ausgleichsblock (25) eindringt; wobei sich der Ablenkblock (3) um die Ablenkblockführungswelle (4) dreht, wobei der Ausgleichsblock (25) von der Ausgleichsblockführungswelle (26) angetrieben wird, um sich linear entlang der Ablenkblockführungswelle (24) in radialer Richtung der Vorrichtung zu bewegen, wobei die Positionierzugstange (6) über eine Gruppe von Schrauben II (10) mit dem Kraftfutter (11) verbunden und an diesem befestigt ist; wobei die Klemmbacke (7) über eine Gruppe von Schrauben I (8) und eine Gruppe von Stiften I (9) mit der Positionierzugstange (6) verbunden und befestigt ist; wobei die Staubabdeckung (13) über eine Gruppe von Schrauben (14) mit der kreisförmigen Platte (5) verbunden und befestigt ist; wobei die Stützwelle (15) die Basis I (1) durchdringt und durch eine Gewindeverbindung mit der Basis II (22) verbunden und befestigt ist, wobei das obere Ende der Stützwelle (15) über die Schraube V (16) mit der kreisförmigen Platte (5) verbunden und befestigt ist; wobei die Positionierzugstangen-Druckplatte (27) durch Gewindeverbindung an der kreisförmigen Platte (5) befestigt ist, wobei sich die Positionierzugstange (6) linear in radialer Richtung in einer Führungsnut zwischen der kreisförmigen Platte (5) und der Positionierzugstangen-Druckplatte (27) bewegt; wobei die luftdichte Basis (28) an der kreisförmigen Platte (5) befestigt ist, wobei die luftdichte Hubplatte (29) den Verfahrbereich in vertikaler Richtung begrenzt, und wobei die Vorrichtung über eine Gruppe von Schrauben VII (19) fest mit dem Spindelkörper (18) verbunden ist.

2. Spannwerkzeug für Drehmaschine zum Spannen einer Automobilnabe nach Anspruch 1, wobei die Basis I(1) aus einer geschmiedeten Aluminiumlegierung besteht.

3. Spannwerkzeug für Drehmaschine zum Spannen einer Kraftfahrzeugnabe nach Anspruch 1, wobei der Winkel der Klemmbacke (7) 75 °, 45 ° oder 60 ° beträgt.

4. Spannwerkzeug für Drehmaschine zum Spannen einer Automobilnabe nach Anspruch 1, wobei die Klemmbacke (7) aus einer Aluminiumlegierung besteht.

5. Spannwerkzeug für Drehmaschine zum Spannen einer Automobilnabe nach Anspruch 1, wobei die Außenfläche des Ablenkblocks (3) durch langsames Drahtschneiden bearbeitet ist.

6. Spannwerkzeug für Drehmaschine zum Spannen einer Automobilnabe nach Anspruch 1, wobei die Länge des Kraftarms, der durch den Kraftanwendungspunkt der Ausgleichsblockführungswelle (26) und des Ablenkblocks (3) und des Drehzentrums der Ablenkblockführungswelle (4) gebildet ist, 1-5 mal die Länge des Kraftarms ist, der durch den Kraftanwendungspunkt des Ablenkblocks (3) und die Positionierzugstange (6) und das Rotationszentrum der Ablenkblockführungswelle (4) gebildet ist.

7. Spannwerkzeug für Drehmaschine zum Spannen einer Automobilnabe nach Anspruch 6, wobei die Länge des Kraftarms, der durch den Kraftanwendungspunkt der Ausgleichsblockführungswelle (26) und des Ablenkblocks (3) und des Drehzentrums der Ablenkblockführungswelle (4) gebildet wird, doppelt so lang wie der Kraftarm ist, der durch den Kraftanwendungspunkt des Ablenkblocks (3) und die Positionierzugstange (6) und das Rotationszentrum der Ablenkblockführungswelle (4) gebildet wird.

8. Spannwerkzeug für Drehmaschine zum Spannen einer Kraftfahrzeugnabe nach Anspruch 1, wobei 2, 3, 4, 5, 6, 7, 8, 9 oder 10 Drainagelöcher in Umfangsrichtung der Basis II (22) gleichmäßig verteilt sind.

9. Spannwerkzeug für Drehmaschine zum Spannen einer Automobilnabe nach Anspruch 1, wobei eine Gewichtsreduzierungsgrube innerhalb der kreisförmigen Platte (5) angeordnet ist.

## Revendications

1. Dispositif de fixation de tour pour serrer un moyeu d'automobile, comprenant une base I (1), un bloc de support de bloc de déviation (2), un bloc de déviation (3), un arbre de guidage de bloc de déviation (4), une plaque circulaire (5), un tige de traction de positionnement (6), une mâchoire de serrage (7), des vis I (8), des broches I (9), des vis II (10), un mandrin de puissance (11), des vis III (12), un cache-poussière (13), des vis IV (14), un arbre de support (15), une vis V (16), des vis VI (17), un corps de broche (18), des vis VII (19), un rivet (20), une base II (22), des vis VIII (23), un bloc d'équilibrage (25), un arbre de guidage de bloc d'équilibrage (26), une plaque de pression de tige de traction de positionnement (27), une base étanche à l'air (28), et une plaque de levage étanche à l'air (29), **caractérisé en ce que** le dispositif de fixation de tour comprend encore un joint torique en caoutchouc (21), un rail de guidage de bloc d'équilibrage (24) et une broche (30), dans lequel la base II (22) est reliée à la base I (1) via un groupe de vis VIII (23) et la broche II (30), la plaque circulaire (5) est reliée à la base I (1) via un groupe des vis VI (17), le mandrin de puissance (11) est relié à la base II (22) via un groupe de vis III (12), le joint torique en caoutchouc (21) est placé entre le mandrin de puissance (11) et une rainure de la base II (22), le rivet (20) pénètre à travers le mandrin de puissance (11) et est en raccordement fileté avec l'intérieur du corps de broche (18), le rail de guidage de bloc d'équilibrage (24) est relié de façon fixe à la base I (1) via un groupe de vis VIII (23), le bloc de support de bloc de déviation (2) est relié à la base I (1), l'arbre de guidage de bloc de déviation (4) pénètre à travers un trou traversant sur le bloc de déviation (3) et est immobilisé, l'arbre de guidage de bloc d'équilibrage (26) pénètre à travers le bloc de déviation (3) et le bloc d'équilibrage (25), le bloc de déviation (3) tourne autour de l'arbre de guidage de bloc de dé viation (4), le bloc d'équilibrage (25) est entraîné par l'arbre de guidage de bloc d'équilibrage (26) pour se déplacer linéairement le long du rail de guidage de bloc d'équilibrage (24) dans la direction radiale de la dispositif de fixation, la tige de traction de positionnement (6) est reliée et fixée au mandrin de puissance (11) par l'intermédiaire de un groupe de vis II (10), la mâchoire de serrage (7) est reliée et fixée à la tige de traction de positionnement (6) via un groupe de vis I (8) et un groupe de broches I (9), le cache-poussière (13) est relié et fixé à la plaque circulaire (5) via un groupe de vis (14), l'arbre de support (15) pénètre à travers la base I (1) et est relié et fixé à la base II (22) par raccordement fileté, l'extrémité supérieure de l'arbre support (15) est reliée et fixée à la plaque circulaire (5) via la vis V (16), la plaque de pression de tige de traction de positionnement (27) est fixée sur la plaque circulaire (5) par raccordement fileté, la tige de traction de positionnement (6) se déplace linéairement dans le sens radial dans une rainure de guidage entre la plaque circulaire (5) et la plaque de pression de tige de traction de positionnement (27), la base étanche à l'air (28) est fixée sur la plaque circulaire (5), la plaque de levage étanche à l'air (29) limite la plage de déplacement dans le sens vertical et le dispositif de fixation est relié de manière fixe au corps de broche (18) via un groupe de vis VII (19).

2. Dispositif de fixation de tour pour serrer un moyeu d'automobile selon la revendication 1, dans lequel la base I (1) est en alliage d'aluminium forgé.

3. Dispositif de fixation de tour pour serrer un moyeu d'automobile selon la revendication 1, dans lequel l'angle de la mâchoire de serrage (7) est de 75 °, 45 ° ou 60 °.

4. Dispositif de fixation de tour pour serrer un moyeu d'automobile selon la revendication 1, dans lequel la mâchoire de serrage (7) est en alliage d'aluminium.

5. Dispositif de fixation de tour pour serrer un moyeu d'automobile selon la revendication 1, dans lequel la surface extérieure du bloc de déviation (3) est usinée par coupe de fil à faible vitesse.

6. Dispositif de fixation de tour pour serrer un moyeu d'automobile selon la revendication 1, dans laquelle la longueur du bras de force formé par le point d'application de force de l'arbre de guidage de bloc d'équilibrage (26) et le bloc de déviation (3) et le centre de rotation du arbre de guidage de bloc de déviation (4) est de 1 à 5 fois la longueur du bras de force formé par le point d'application de force du bloc de déviation (3) et la tige de traction de positionnement (6) et le centre de rotation de l'arbre de guidage de bloc de déviation (4).

7. Dispositif de fixation de tour pour serrer un moyeu d'automobile selon la revendication 6, dans laquelle la longueur du bras de force formé par le point d'application de force de l'arbre de guidage de bloc d'équilibrage (26) et le bloc de déviation (3) et le centre de rotation de l'arbre de guidage de bloc de déviation (4) est 2 fois la longueur du bras de force formé par le point d'application de force du bloc de déviation (3) et la tige de traction de positionnement (6) et le centre de rotation de l'arbre de guidage de bloc de déviation (4).

8. Dispositif de fixation de tour pour serrer un moyeu d'automobile selon la revendication 1, dans lequel 2, 3, 4, 5, 6, 7, 8, 9 ou 10 trous de drainage sont uniformément répartis dans la direction circonférentielle de la base II (22).

9. Dispositif de fixation de tour pour serrer un moyeu d'automobile selon la revendication 1, dans lequel une fosse de réduction de poids est disposée à l'intérieur de la plaque circulaire (5).
